# FASCICULE DE BREVET EUROPEEN

(11) **EP 0 876 440 B1**
(45) Date de publication et mention de la délivrance du brevet: **25.04.2001**
(21) Numéro de dépôt: 97900902.4
(22) Date de dépôt: 21.01.1997
(51) Int. Cl.: C09J 133/06, C09J 7/02, C08F 220/08

(54) **ADHESIFS SENSIBLES A LA PRESSION ET FILMS AUTOCOLLANTS UTILISANT LESDITS ADHESIFS**
DRUCKSENSITIVE KLEBMITTEL UND DIESE VERWENDENDE SELBSTKLEBEFILM
PRESSURE-SENSITIVE ADHESIVES AND SELF-ADHESIVE FILMS USING SAID ADHESIVES

(30) Priorité: 25.01.1996 BE 9600071
(43) Date de publication de la demande: 11.11.1998
(73) Titulaire: UCB, S.A., 1070 Bruxelles (BE)
(72) Inventeur: SEGERS, Willy, B-7050 Jurbise (BE); HOEBEKE, Jean-Marie, B-6230 Thimeon (BE); LOUTZ, Jean-Marie, B-1180 Bruxelles (BE)
(74) Mandataire: Lechien, Monique
(86) Numéro de dépôt international: BE9700009
(87) Numéro de publication internationale: WO9727261

(56) Documents cités:
- JOURNAL OF DENTAL RESEARCH, vol. 72, no. 3, 1 Mars 1993, pages 558-565, XP000569181 ASMUSSEN E ET AL: "SOLUBILITY PARAMETERS, FRACTIONAL POLARITIES, AND BOND STRENGTHS OF SOME INTERMEDIARY RESINS USED IN DENTIN BONDING"
- PATENT ABSTRACTS OF JAPAN vol. 014, no. 126 (C-0699), 9 Mars 1990 & JP 02 003404 A (MITSUBISHI YUKA BADISCHE CO LTD), 9 Janvier 1990,

## Description

La présente invention se rapporte à des adhésifs sensibles à la pression, c'est-à-dire dont l'adhésion sur un substrat donné est obtenue après simple application d'une légère pression. Plus particulièrement, la présente invention se rapporte à de tels adhésifs sensibles à la pression, présentés sous forme d'émulsion aqueuse et possédant une rémanence améliorée des propriétés adhésives lorsque lesdits adhésifs sont appliqués sur divers substrats, notamment des films de polychlorure de vinyle, polyéthylène, polypropylène, polyéthylène téréphtalate, le papier, et le verre. La présente invention se rapporte également à des films autocollants et autres articles similaires utilisant lesdits adhésifs.

A l'origine, les adhésifs sensibles à la pression destinés au polychlorure de vinyle plastifié étaient obtenus par polymérisation radicalaire dans des solvants organiques comme l'acétate d'éthyle, le toluène ou l'hexane ou encore dans une combinaison de plusieurs de ces solvants. Vu la nature des paramètres régissant la copolymérisation radicalaire en solvants, conduisant à des masses moléculaires faibles, ces produits devaient impérativement subir une postréticulation importante afin de présenter un équilibre entre les différentes propriétés adhésives, compatibles avec les exigences inhérentes à la nature même du polychlorure de vinyle plastifié. Cela signifie par exemple, que la cohésion interne du produit doit être suffisante pour pouvoir compenser les altérations de propriétés dues à la migration des plastifiants du polychlorure de vinyle.

Pour des raisons évidentes de protection de l'environnement, les adhésifs sensibles à la pression obtenus en émulsion aqueuse sont aujourd'hui préférés à ceux obtenus en solution dans un solvant organique. Ainsi le brevet US-A-3.983.297 divulgue un adhésif sensible à la pression comprenant, comme constituant principal, un copolymère préparé en émulsion comprenant (1) 94 à 98% en moles d'au moins un acrylate d'alkyle le cas échéant en mélange avec le méthacrylate de méthyle ou l'acétate de vinyle, (2) 2 à 6% en moles d'acide acrylique et/ou méthacrylique, et (3) 0,002 à 0,05% en moles d'un composé polyfonctionnel copolymérisable. De même le brevet US-A-3.998.997 décrit un adhésif sensible à la pression obtenu par polymérisation en émulsion d'un système de monomères comprenant (1) 50 à 60 parties en poids d'acrylate de 2-éthylhexyle, (2) 35 à 45 parties en poids d'acrylate d'éthyle, (3) 1 à 3 parties en poids d'acide acrylique, (4) 2 à 5 parties en poids de diacétophénone acrylamide ou diacétone acrylamide et, le cas échéant, du (méth)acrylate d'hydroxypropyle, et/ou de l'anhydride maléique, et/ou du (méth)acrylate de glycidyle et/ou un agent de réticulation vinylique polyfonctionnel.

La demande de brevet japonais publiée sous le n° 2-003404 enseigne la polymérisation en émulsion d'un mélange de monomères comprenant:
(A) de 60 à 99% en poids d'un acrylate d'alcool C₄-C₈,
(B) de 0,2 à 10% en poids d'un monomère fonctionnel choisi parmi les acides carboxyliques α,β-insaturés et leurs anhydrides, les 2-hydroxyalkyl(méth)acrylates et les (méthyol) (méth)acrylamides, et
(C) de 0 à 30% d'un autre monomère vinylique,
en présence d'un composé hydrosoluble choisi parmi le dihydrofuranne, le dihydropyrane et les acides méthylcyclohexene et norbornène dicarboxyliques pour obtenir une dispersion de copolymère possédant une température de transition vitreuse de -10 à -90°C.

Dans le cas des adhésifs sensibles à la pression obtenus en solution, il est possible d'obtenir un compromis acceptable entre l'adhésion et le pouvoir collant (tack) d'une part, et la cohésion d'autre part en réticulant le produit à l'aide par exemple de chélates métalliques. Cette technique offre une assez grande souplesse et permet d'ajuster assez facilement les propriétés du produit au niveau souhaité.

Dans le cas des adhésifs sensibles à la pression obtenus en émulsion, le problème est nettement plus complexe car on a une plus grande dispersité dans la répartition des masses molaires; de plus, l'équilibre du produit est également perturbé par la présence d'une série d'auxiliaires de polymérisation tels que les émulsifiants, externes aux chaînes de polymère, et qui peuvent se comporter, par exemple, comme des plastifiants. Il est admis notamment que la présence de longues chaînes acryliques, caractéristiques de polymérisation en émulsion, est responsable du manque d'adhésion de ces produits.

Si l'on réduit la longueur des chaînes acryliques (par exemple en utilisant un agent de transfert pendant la polymérisation en émulsion), on améliore bien l'adhésion (résistance au pelage), mais dans ce cas, on perd la cohésion (résistance au cisaillement), car on admet généralement qu'il faut de longues chaînes pour obtenir une cohésion acceptable.

De nombreux moyens ont été mentionnés dans la littérature pour amener la cohésion des adhésifs sensibles à la pression obtenus en émulsion au niveau désiré tout en maintenant une agressivité de contact (telle que définie ci-après), au moins égale à 7N/25mm environ. L'un des moyens les plus utilisés est la copolymérisation de monomères fonctionnalisés comme le N-méthylolacrylamide. Ce monomère permet effectivement d'augmenter la cohésion interne du produit, mais au détriment des autres propriétés. De plus, ces propriétés sont fortement influencées par le traitement thermique auquel le copolymère a été soumis.

En outre, la présence dans le N-méthylolacrylamide de certaines impuretés comme l'acrylamide ou le formol peut également produire des effets néfastes, tels que des augmentations non désirées de la viscosité. D'autres moyens d'augmentation de la cohésion, tels que l'emploi de silanes fonctionnels porteurs d'une double liaison (par exemple le méthacrylate de propyltriméthoxysilane ou le vinyltriéthoxysilane), engendrent des problèmes de dégradation des propriétés dans le temps ou bien ne peuvent être utilisés que dans le cadre d'un système bicomposant qui impose à l'utilisateur des contraintes pratiques souvent inacceptables.

On connaît enfin par la demande de brevet EP-A-620.234 des dispersions aqueuses, utilisées notamment dans des compositions adhésives résistant à la chaleur ou des colles de contact, préparées par polymérisation en émulsion d'un monomère dont un homopolymère a une température de transition vitreuse (Tg) supérieure à 30°C et a une seule insaturation éthylénique dans la molécule et d'un monomère souple dont un homopolymère a une température de transition vitreuse inférieure à 10°C et a au plus une insaturation éthylénique dans la molécule, les proportions des deux monomères étant telles que la température de transition vitreuse du copolymère soit comprise entre 5 et 25°C, en présence d'anhydride méthacrylique comme monomère réticulant.

Ces dispersions aqueuses, dont la teneur en eau est de 45 à 55% en poids, ne procurent toutefois pas des adhésifs sensibles à la pression possédant le compromis recherché de propriétés d'adhésion et de cohésion. On peut ainsi résumer l'état de la technique dans le domaine des adhésifs acryliques sensibles à la pression obtenus en émulsion par le fait que, en raison des effets antagonistes exercés par de longues chaînes acryliques sur ces deux propriétés, il est difficile d'obtenir en émulsion aqueuse un bon compromis entre l'adhésion et la cohésion.

Le problème à résoudre par l'invention consiste donc en la mise au point d'un adhésif sensible à la pression, applicable notamment sur polychlorure de vinyle, polyéthylène, polypropylène, polyéthylène téréphtalate, papier, verre, etc. et possédant à la fois une cohésion suffisante pour combattre les effets de la migration des plastifiants et une adhésion et un pouvoir collant initiaux suffisamment élevés, afin de conserver un niveau de propriétés acceptable après vieillissement du produit. On admet généralement qu'un produit a un vieillissement accéléré correct si la valeur des propriétés adhésives, mesurées après que le film ait séjourné pendant 7 jours dans une étuve à 60°C, reste égale ou supérieure à 60% des valeurs mesurées initialement.

Ce problème est résolu par la présente invention dans le cadre d'un système monocomposant adhésif sensible à la pression constitué d'une dispersion aqueuse d'un copolymère d'esters acryliques obtenu en présence de monomère réticulant porteur de groupe fonctionnel, ledit copolymère ayant une température de transition vitreuse ne dépassant pas 0°C, caractérisée en ce que ledit monomère réticulant est l'anhydride méthacrylique utilisé à raison de 0.4 à 2.5 % en poids des matières solides de la dispersion.

Les esters acryliques entrant dans la composition d'un copolymère tel que défini précédemment sont bien connus dans l'état de la technique. Il s'agit d'une part d'esters acryliques et méthacryliques dont l'homopolymère a une température de transition vitreuse ne dépassant pas 10°C tels que des acrylates ayant de 1 à 8 atomes de carbone dans le radical ester et des méthacrylates ayant au moins 5 atomes de carbone dans le radical ester. Ces esters sont habituellement désignés dans la technique comme faisant partie des monomères souples, par opposition aux monomères durs (dont l'homopolymère a une température de transition vitreuse au moins égale à 20°C) tels que le styrène, les méthacrylates ayant au plus 4 atomes de carbone dans le radical ester et certains acrylates comme ceux de t-butyle, de n-tétradécyle et de n-hexadécyle.

Comme exemples d'esters acryliques entrant dans le cadre de la présente invention, on peut citer notamment les acrylates de méthyle, d'éthyle, d'isopropyle, de n-propyle, d'isobutyle, de n-butyle, de 2-éthylhexyle et de n-octyle ainsi que les méthacrylates de n-pentyle, de n-hexyle, de n-octyle, de n-décyle, de n-dodécyle, de n-tétradécyle et d'isobornyle. De préférence le copolymère de la dispersion aqueuse selon l'invention comprend au moins deux esters acryliques souples tels que définis précédemment et dont les proportions sont telles que la température de transition vitreuse du copolymère ne dépasse pas 0°C. De préférence cet ensemble d'au moins deux esters acryliques souples comprend d'une part un monomère principal, c'est-à-dire présent à raison d'au moins 50% en poids de l'ensemble, et d'autre part un ou plusieurs monomères secondaires présents à raison de moins de 50% en poids de l'ensemble. Selon un mode de réalisation plus particulièrement préféré de la présente invention, l'ensemble d'esters acryliques souples comprend de 50 à 90% en poids d'acrylate de 2-éthylhexyle et le complément à 100% d'acrylate(s) et/ou méthacrylate(s) dont le(s) homopolymère(s) a(ont) une(des) température(s) de transition vitreuse supérieure(s) à celle du polyacrylate de 2-éthylhexyle (-70°C).

L'un des traits essentiels de la présente invention consiste en ce que le copolymère acrylique dont la Tg ne dépasse pas 0°C est modifié par réticulation par l'anhydride méthacrylique. En fonction des disponibilités commerciales et des contraintes de fabrication, l'anhydride méthacrylique utilisé pour la préparation du copolymère acrylique modifié en dispersion aqueuse est le plus souvent un produit de pureté au moins égale à 96% en poids, comprenant en outre jusqu'à 3% en poids d'acide méthacrylique ainsi que jusqu'à 0,2% en poids d'au moins un inhibiteur de polymérisation (le plus souvent de type phénolique tel que le butylhydroxytoluène) et le complément à 100% de diverses impuretés.

Un autre trait essentiel de la présente invention réside dans le fait que le monomère réticulant procure des effets techniques avantageux sur les propriétés de l'adhésif sensible à la pression déjà lorsque sa proportion en poids des matières solides de la dispersion est très faible. L'anhydride méthacrylique représente en effet entre 0,4 et 2,5% environ, et plus particulièrement entre 0,5% et 1,5%, en poids des matières solides de la dispersion. On observe que des proportions supérieures à 2,5% en poids n'apportent pas d'amélioration supplémentaire des propriétés de l'adhésif et peuvent conduire à des difficultés de synthèse de l'émulsion en raison de la tendance bien connue de l'anhydride méthacrylique à précipiter dans l'eau en formant une masse gélatineuse.

Une amélioration complémentaire des propriétés de l'adhésif selon l'invention peut être obtenue lorsque la dispersion aqueuse comprend en outre au moins un agent de transfert de chaîne. Le choix de l'anhydride méthacrylique comme monomère réticulant présente l'avantage de permettre l'emploi d'agents de transfert de chaîne très usuels au lieu des composés hydrosolubles très particuliers de JP-A-2/003404. Ces agents de transfert de chaîne comprennent généralement au moins un groupe à hydrogène actif tel qu'un groupe hydroxyle ou -SH en tant que groupe de transfert de chaîne. Comme exemples d'agents de transfert de chaîne utilisables dans la dispersion aqueuse selon l'invention, on peut citer l'acide thioglycolique, l'acide alkyl thioacétique, des mercaptans tels que le butylmercaptan, le n-dodécylmercaptan, le dodécylbenzylmercaptan, ainsi que des composés hydroxylés aliphatiques saturés hydrosolubles. Parmi ces derniers, on peut citer notamment des amines aliphatiques hydroxyalkyle saturées comme la tétrahydroxyéthyl éthylènediamine ainsi que les alcools monohydriques comme l'isopropanol, l'isobutanol, l'alcool isoamylique, l'isohexanol et le cyclohexanol. De préférence l'agent de transfert de chaîne est présent dans la dispersion aqueuse selon l'invention dans une proportion comprise entre environ 0,05 et 2% en poids des matières solides, selon le type d'agent choisi. A titre d'exemple, un mercaptan sera le plus souvent choisi dans une proportion comprise entre 0,05 et 0,2% environ en poids des matières solides, tandis qu'un alcool monohydrique sera plutôt choisi dans une proportion comprise entre 1 et 2% environ en poids des matières solides de la dispersion.

L'agent de transfert de chaîne n'ayant pas réagit peut être aisément détecté par chromatographie gazeuse à injection par espace de tête.

Comme cela est bien connu dans la technique, la dispersion aqueuse selon l'invention peut en outre comprendre au moins un acide carboxylique insaturé, en une quantité de préférence comprise entre 0,5 et 5%, et plus particulièrement entre 2,5 et 5% en poids des matières solides de la dispersion. Comme exemples on peut citer des acides α,β-éthyléniquement insaturés tels que l'acide acrylique, l'acide méthacrylique, l'acide maléique et l'acide fumarique.

On effectue la synthèse de la dispersion aqueuse selon l'invention dans les conditions classiques d'une polymérisation en émulsion en utilisant comme catalyseur un persulfate tel que le persulfate d'ammonium, le persulfate de potassium ou le persulfate de sodium à raison de 0,1 à 0,5% environ en poids total des monomères et en utilisant de préférence un activateur choisi parmi les sulfites, les hydrogénosulfites et les métabisulfites, avec une préférence toute particulière pour le métabisulfite de sodium. Le système catalytique peut en outre comprendre un peroxyde ou hydroperoxyde organique, ou bien encore un système redox. L'émulsion est obtenue par l'emploi d'agents tensioactifs qui sont, de préférence, des mélanges d'au moins un agent tensioactif non ionique et d'au moins un agent tensioactif anionique. Comme agents anioniques on peut citer notamment des alcoylsulfates, des alcoylsulfonates et des alcoylarylsulfonates, ainsi que des esters de l'acide sulfosuccinique avec des alcanols. Un exemple plus particulièrement préféré est le nonylphénol polyglycol éther sulfate de sodium. Comme agents non-ioniques, on peut citer notamment des nonylphénol éthoxylates comprenant de 4 à environ 100 groupes oxyde d'éthylène dans la molécule.

On effectue en général la polymérisation à une température comprise entre 50 et 85°C environ et, de préférence, entre 70 et 85°C. On peut l'effectuer sous la pression normale, mais également sous une pression supérieure à la pression atmosphérique ou en légère dépression, sans que cela porte atteinte à la réaction.

En fonction des utilisations ultérieures, la dispersion aqueuse constituant l'adhésif sensible à la pression selon l'invention comprend de préférence de 57 à 75% environ en poids de copolymère acrylique et de 43 à 25% environ en poids d'eau. Elle peut en outre être caractérisée par les particularités suivantes, à titre préférentiel:
- un pH compris entre 3,5 et 5,0 environ,
- une dimension moyenne des particules dans la dispersion comprise entre 270 et 500 nanomètres (nm) environ.

Les adhésifs sensibles à la pression selon la présente invention présentent non seulement le compromis recherché de propriétés d'adhésion et de cohésion satisfaisantes mais aussi et surtout une rémanence tout à fait remarquable de ces propriétés dans le temps, y compris dans des conditions sévères de température. Cette rémanence se traduit notamment par des propriétés qui, mesurées après que le film ait séjourné pendant 7 jours dans une étuve à 60°C, restent au moins égales à 60%, de préférence au moins 90%, des valeurs mesurées initialement. Les adhésifs sensibles à la pression selon la présente invention se caractérisent en outre par la transparence de leurs filins et leur absence de jaunissement au cours du temps.

Selon un second aspect, la présente invention concerne donc un adhésif sensible à la pression sous forme de dispersion aqueuse possédant l'ensemble des propriétés suivantes:
- une résistance au cisaillement, mesurée selon la méthode FINAT n° 8, au moins égale à 5000 minutes environ,
- une agressivité de contact, mesurée selon la méthode FINAT n° 9, au moins égale à 7N/25mm environ, et
- une adhésion sur verre à 180° après 20 minutes, selon la méthode FINAT n° L, après 7 jours de contrecollage à 60°C, au moins égale à 8N/25mm environ.

De préférence un tel adhésif est constitué d'un copolymère principalement de monomères (méth)acryliques.

Les adhésifs sensibles à la pression selon la présente invention peuvent en outre comprendre, pour certaines applications spécifiques, un ou plusieurs biocides tels que notamment des isothiazolones chlorées et non chlorées, en particulier la 2-méthyl-4-isothiazolin-3-one et la 5-chloro-2-méthyl-4-isothiazolin-3-one.

Selon un troisième aspect, la présente invention concerne des films autocollants, notamment à base de polychlorure de vinyle plastifié, polyéthylène, polypropylène, polyéthylène téréphtalate ou de papier, etc. comportant sur l'une de leurs face une couche d'adhésif sensible à la pression tel que décrit précédemment. De tels films trouvent des applications variées dans des domaines comme le marquage, la décoration et le lettrage.

Les exemples suivants illustrent l'invention. Sauf indication contraire, toutes les quantités sont exprimées en poids.

### Exemple 1

Dans un bac équipé d'un agitateur approprié, on charge à température ambiante et dans l'ordre suivant:
- eau déminéralisée 481,6 parties
- carbonate de sodium 2,8 parties
- cyclohexanol 21 parties
- SERMUL EA 146 100,1 parties
SERMUL EA 146 est un émulsifiant anionique à base de nonylphénol polyglycoléther de sodium commercialisé par la société SERVO DELDEN B.V.

L'agitation est maintenue dans ce bac jusqu'à ce que la solution obtenue présente un aspect parfaitement homogène, puis on disperse dans ce bac les monomères suivants:
- Acrylate de 2-éthylhexyle 980 parties
- Acrylate d'éthyle 175 parties
- Acrylate de méthyle 175 parties
- Acide méthacrylique 42 parties
- Acide acrylique 14 parties
- Anhydride méthacrylique 14 parties

Par ailleurs, dans un réacteur à double paroi équipé d'un condensateur, d'un agitateur approprié et d'un thermocouple, on charge successivement 350 parties d'eau, 3,5 parties d'une solution à 10% d'un émulsifiant non-ionique commercialisé sous le nom SYNPERONIC NP 40/70, puis le contenu du réacteur est chauffé à 80°C. Lorsque cette température est atteinte, on additionne 4,2 partie de persulfate d'ammonium puis, à l'aide d'une pompe doseuse, pendant un laps de temps de 4 heures et en maintenant la température entre 80 et 82°C, on additionne toute la pré-émulsion de monomères provenant du bac.

Lorsque l'addition est terminée, on laisse la réaction se poursuivre pendant 1 heure en maintenant la température de la masse entre 80 et 82°C. Cette température est ensuite abaissée jusqu'à 60°C, et on additionne alors:
- Solution à 10% de Nitrate de Fer (III) 3 gouttes
- Solution à 10% de Lupérox H 7 parties
- Solution à 5% de Rongalit C 14 parties

La solution de Lupérox H70 est additionnée pendant un laps de temps de 15 minutes environ tandis que la solution de Rongalit C est introduite en 30 minutes. Rongalit C est un formaldéhyde sulfoxylate de sodium commercialisé par B.A.S.F. AG. Lupérox H70 est un peroxyde organique commercialisé par Luperox GmbH.

Après refroidissement à température ambiante, on additionne:
- Biocide K10 2,4 parties
- Solution à 5% de Borchigel L75 11,9 parties

Le biocide K10 est une composition à base de 2-méthyl-4-isothiazolin-3-one commercialisée par la société PROGIVEN. Le cas échéant, il peut être remplacé en quantité équivalente par ACTICIDE SPX, une solution 1,5% aqueuse d'un mélange de 5-chloro-2-méthyl-4-isothiazolin-3-one et de 2-méthyl-4-isothiazolin-3-one commercialisé par la société THOR CHEMICALS (UK) Ltd. BORCHIGEL L75 est un modificateur de viscosité recommandé pour l'épaississement des dispersions acryliques.

On obtient ainsi un latex exempt de coagulats, dont les caractéristiques physiques sont les suivantes:
- Teneur en matières solides 60%
- Viscosité Brookfield 50 RPM 150 mPa.s
- pH 4,3

L'évaluation des propriétés adhésives se fait de la manière suivante: le produit liquide est enduit sur un papier siliconé de manière à obtenir un dépôt sec d'environ 20 g/m². Le film humide est transféré en étuve ventilée et séché pendant 3 minutes à une température de 110°C. Le complexe final est obtenu en appliquant le film d'adhésif sur un film de polychlorure de vinyle plastifié.

Ce complexe subit ensuite les conditionnements suivants:
- 24 heures à 23°C et 50% d'humidité relative
- 7 jours à 60°C

On mesure sur ce complexe les caractéristiques adhésives suivantes:
- Résistance au pelage (adhésion sur verre après 20 minutes et 24 heures de contrecollage)
- Agressivité de contact ("looptack") sur verre
- Résistance au cisaillement

Pour le produit en dispersion décrit ci-dessus, on obtient les caractéristiques indiquées dans le tableau I ci-après.

Les caractéristiques d'adhésion sur verre à 180° après 20 minutes ou 24 heures de contrecollage ont été mesurées selon la méthode d'essai FINAT n°1 (et exprimées en N/25mm) et la résistance au cisaillement a été mesurée selon la méthode FINAT n°8 et exprimée en minutes. L'agressivité de contact ("looptack") a été mesurée selon la norme FINAT n°9 et exprimée en N/25mm.

### Exemple 2 (comparatif)

La procédure opératoire de l'exemple 1 est répétée sauf en ce qui concerne l'anhydride méthacrylique, qui est remplacé par une quantité équivalente en poids d'un monomère réticulant conventionnel, la N-méthylolacrylamide. Les caractéristiques d'adhésion du produit de dispersion ainsi obtenu ont été mesurées dans les même conditions qu'à l'exemple 1 et les résultats de ces mesures sont indiqués dans le tableau I ci-après.

### Exemple 3

La procédure opératoire de l'exemple 1 est répétée sauf en ce qui concerne le cyclohexanol, qui est remplacé par une quantité équivalente en poids d'un autre agent de transfert, l'isopropanol. Les caractéristiques d'adhésion du produit de dispersion ainsi obtenu ont été mesurées dans les même conditions qu'à l'exemple 1 et les résultats de ces mesures sont indiqués dans le tableau I ci-après.

### Exemple 4

La procédure opératoire de l'exemple 3 est répétée à l'exception de la quantité de l'anhydride méthacrylique, qui est portée à 28 parties (soit 2% des monomères acryliques). Les caractéristiques d'adhésion du produit de dispersion ainsi obtenu ont été mesurées dans les même conditions qu'à l'exemple 1 et les résultats de ces mesures sont indiqués dans le tableau I ci-après

### Exemple 5

La procédure opératoire de l'exemple 1 est répétée sauf en ce qui concerne le cyclohexanol, qui est remplacé par 1,4 partie de n-dodécylmercaptan. Les caractéristiques d'adhésion du produit de dispersion ainsi obtenu ont été mesurées dans les même conditions qu'à l'exemple 1 et les résultats de ces mesures sont indiqués dans le tableau I ci-après.

### Exemple 6

La procédure opératoire de l'exemple 3 est répétée sauf en ce qui concerne l'acrylate de 2-éthylhexyle, qui est remplacé par une quantité équivalente en poids d'acrylate de butyle. La dimension moyenne des particules de la dispersion obtenue est de 425 nanomètres. Ses caractéristiques d'adhésion, mesurées dans les mêmes conditions qu'à l'exemple 1, sont indiqués dans le tableau I ci-après.

**TABLEAU I**

| Propriété | Exemple 1 | Exemple 2 | Exemple 3 | Exemple 4 | Exemple 5 | Exemple 6 |
|---|---|---|---|---|---|---|
| Adhésion 20' (23°C) | 12,0 | 10,0 | 14,6 | 10,0 | 9,0 | 14,0 |
| Adhésion 24h (23°C) | 10,0 | 17,2 | 19,3 | 18,0 | 18,0 | 15,0 |
| Adhésion 20' après 7 jours à 60°C | 12,5 | 1,9 | 9,3 | 10,0 | 11,0 | 17,0 |
| Cisaillement | >10 000 | 4 600 | >10 000 | >10 000 | >10 000 | >10 000 |
| Agressivité | 14,0 | 14,3 | 14,5 | 9,5 | 9,5 | 7,0 |
| pH | 4,5 | (1) | 4,3 | 4,3 | 4,5 | 4,6 |

| | | | | | | |
|---|---|---|---|---|---|---|
| ⁽¹⁾ propriété non déterminée pour cet exemple. | | | | | | |

Les résultats rassemblés dans le tableau I montrent que, par rapport à l'exemple 2 comparatif, la présente invention apporte:
- un maintien ou une amélioration de la résistance au pelage à température ambiante,
- une amélioration très importante (multiplication par un facteur au moins égal à 5) de la résistance au pelage dans des conditions sévères (7 jours à 60°C) et,
- une amélioration importante (multiplication par un facteur au moins égal à 2) de la résistance au cisaillement.

### Exemple 7

La procédure opératoire de l'exemple 1 est répétée, à l'exception de la quantité d'eau déminéralisée, qui est diminuée de manière à ajuster la teneur en matière solides à 65%, et à l'exception du cyclohexanol, qui est remplacé par une quantité équivalente en poids d'un autre agent de transfert, le butanol secondaire. Les caractéristiques physico-chimiques (pH, dimension moyenne de particules) et d'adhésion du produit ainsi obtenu, mesurée dans les mêmes conditions qu'à l'exemple 1, sont indiquées dans le tableau II ci-après.

### Exemple 8

La procédure opératoire de l'exemple 7 est répétée, à l'exception du butanol secondaire, qui est remplacé par un autre agent de transfert, l'acide thioglycolique, à raison de 0,05% en poids par rapport aux monomères acryliques. Les caractéristiques du produit obtenu sont rapportées dans le tableau II ci-après.

### Exemple 9

La procédure opératoire de l'exemple 7 est répétée, à l'exception du butanol secondaire, qui est remplacé par un autre agent de transfert, le tétrabromure de carbone, à raison de 0,1% en poids par rapport aux monomères acryliques. Les caractéristiques du produit obtenu sont rapportées dans le tableau II ci-après.

### Exemple 10

La procédure opératoire de l'exemple 1 est répétée, à l'exception de l'agent de transfert, qui est supprimé, et de l'anhydride méthacrylique dont la proportion est réduite de moitié (à 0,5% des monomères acryliques). Les caractéristiques du produit obtenu sont rapportées dans le tableau II ci-après.

### Exemple 11

La procédure opératoire de l'exemple 8 est répétée, à l'exception de l'acide thioglycolique dont la proportion est doublée (à 0,1% des monomères acryliques) et de l'acrylate de 2-éthylhexyle qui est remplacé par une quantité équivalente d'acrylate de butyle. Les caractéristiques du produit obtenu sont rapportées dans le tableau II ci-après.

### Exemple 12 (comparatif)

La procédure opératoire de l'exemple 1 est répétée, à l'exception de l'anhydride méthacrylique qui est totalement omis. Les caractéristiques du produit obtenu sont rapportées dans le tableau II ci-après.

### Exemple 13

La procédure opératoire de l'exemple 1 est répétée, à l'exception de l'anhydride méthacrylique dont la proportion est doublée (à 2% des monomères acryliques) et des acides acrylique et méthacrylique qui sont totalement omis. Les caractéristiques du produit obtenu sont rapportées dans le tableau II ci-après.

**TABLEAU II**

| Propriété | Exemple 7 | Exemple 8 | Exemple 9 | Exemple 10 | Exemple 11 | Exemple 12 | Exemple 13 |
|---|---|---|---|---|---|---|---|
| Adhésion 20' (23°C) | 10,0 | 10,0 | 12,0 | 7,0 | 12,0 | 14,5 | 10,0 |
| Adhésion 24h (23°C) | 18,0 | 16,0 | 16,0 | 11,0 | 18,0 | 15,0 | 13,0 |
| Adhésion 20' après jours à 60°C | 12,0 7 | 12,0 | 16,0 | 10,0 | 16,0 | 10,5 | 11,0 |
| Cisaillement | >10 000 | >10 000 | >10 000 | 5 000 | >10 000 | 700 | > 10 000 |
| Agressivité | 12,0 | 11,0 | 12,0 | 9,0 | 10,0 | 13,5 | 11,0 |
| pH | 4,3 | 4,9 | 4,5 | 4,0 | 4,2 | 4,9 | 4,0 |
| DMP (2) | 310 | 350 | 313 | 320 | 440 | 310 | 350 |

| | | | | | | | |
|---|---|---|---|---|---|---|---|
| ⁽²⁾ dimension moyenne des particules de la dispersion exprimée en nm. | | | | | | | |

Les résultats rassemblés dans le tableau II montrent, par rapport aux exemples comparatifs 2 et 12:
- une amélioration très importante de la résistance au pelage dans des conditions sévères (7 jours à 60°C) même lorsque la proportion d'anhydride méthacrylique est abaissée à 0,5% en poids,
- une amélioration sensible de la résistance au cisaillement au prix, dans ce dernier cas, d'une légère diminution de la résistance au pelage à température ambiante.

## Revendications

1. Adhésif sensible à la pression constitué d'une dispersion aqueuse d'un copolymère d'esters acryliques obtenu en présence de monomère réticulant porteur de groupe fonctionnel, ledit copolymère ayant une température de transition vitreuse ne dépassant pas 0°C, caractérisé en ce que ledit monomère réticulant est l'anhydride méthacrylique, utilisé à raison de 0,4 à 2,5 % en poids des matières solides de la dispersion.

2. Adhésif sensible à la pression selon la revendication 1, caractérisé en ce que les esters acryliques entrant dans la composition dudit copolymère sont des esters acryliques et méthacryliques dont l'homopolymère a une température de transition vitreuse ne dépassant pas 10°C.

3. Adhésif sensible à la pression selon la revendication 1 ou la revendication 2, caractérisé en ce que lesdits esters sont choisis parmi les acrylates ayant de 1 à 8 atomes de carbone dans le radical ester et les méthacrylates ayant au moins 5 atomes de carbone dans le radical ester.

4. Adhésif sensible à la pression selon l'une des revendications 1 à 3, caractérisé en ce qu'il comprend en outre au moins un agent de transfert de chaîne.

5. Adhésif sensible à la pression selon la revendication 4, caractérisé en ce que ledit agent de transfert de chaîne est choisi parmi l'acide thioglycolique, l'acide alkyl thioacétique, les mercaptans, les composés hydroxylés aliphatiques saturés hydrosolubles, les amines aliphatiques hydroxyalkyle, les alcools monohydriques et le tétrabromure de carbone.

6. Adhésif sensible à la pression selon la revendication 4 ou la revendication 5, caractérisé en ce que ledit agent de transfert de chaîne est présent dans une proportion comprise entre 0,05 et 2% en poids des matières solides.

7. Adhésif sensible à la pression selon l'une des revendications 1 à 6, caractérisé en ce qu'il comprend en outre au moins un acide carboxylique insaturé en une quantité comprise entre 0,5 et 5% en poids des matières solides.

8. Adhésif sensible à la pression selon l'une des revendications 1 à 7, caractérisé en ce que la dispersion aqueuse comprend de 57 à 75% en poids de copolymère acrylique et de 43 à 25% en poids d'eau.

9. Adhésif sensible à la pression selon l'une des revendications 1 à 8, caractérisé en ce que le pH de la dispersion aqueuse est compris entre 3,5 et 5,0.

10. Adhésif sensible à la pression selon l'une des revendications 1 à 9, caractérisé en ce que la dimension moyenne des particules de la dispersion est comprise entre 270 et 500 nanomètres.

11. Adhésif sensible à la pression selon l'une des revendications 1 à 10, caractérisé en ce qu'il possède l'ensemble des propriétés suivantes:
- une résistance au cisaillement, mesurée selon la méthode FINAT n° 8, au moins égale à 5000 minutes,
- une agressivité de contact, mesurée selon la méthode FINAT n° 9, au moins égale à 7N/25mm, et
- une adhésion sur verre à 180° après 20 minutes, selon la méthode FINAT n° 1, après 7 jours de contrecollage à 60°C, au moins égale à 8N/25mm.

12. Film autocollant comportant sur l'une de ses faces une couche d'un adhésif sensible à la pression conforme à l'une des revendications 1 à 11.

13. Utilisation d'anhydride méthacrylique pour la préparation d'un adhésif sensible à la pression selon l'une des revendications 1 à 11.

## Claims

1. Pressure-sensitive adhesive consisting of an aqueous dispersion of a copolymer of acrylic esters obtained in the presence of a crosslinking monomer carrying a functional group, the said copolymer having a glass transition temperature not exceeding 0°C, characterized in that the said crosslinking monomer is methacrylic anhydride, used in an amount of 0.4 to 2.5 % by weight of solid matter of the dispersion.

2. Pressure-sensitive adhesive according to claim 1, characterized in that acrylic esters entering into the composition of the said copolymer are acrylic and methacrylic esters of which the homopolymer has a glass transition temperature not exceeding 10°C.

3. Pressure-sensitive adhesive according to claim 1 or claim 2, characterized in that the said esters are chosen from acrylates having 1 to 8 carbon atoms in the ester radical and methacrylates having at least 5 carbon atoms in the ester radical.

4. Pressure-sensitive adhesive according to one of claims 1 to 3, characterized in that it additionally includes at least one chain transfer agent.

5. Pressure-sensitive adhesive according to claim 4, characterized in that the said chain transfer agent is chosen from thioglycolic acid, alkyl thioacetic acid, mercaptans, water soluble saturated aliphatic hydroxylated compounds, hydroxyalkyl aliphatic amines, monohydric alcohols and carbon tetrabromide.

6. Pressure-sensitive adhesive according to claim 4 or claim 5, characterized in that the chain transfer agent is present in a proportion of between 0.05 and 2 % by weight of solid matter.

7. Pressure-sensitive adhesive according to one of claims 1 to 6, characterized in that it additionally includes at least one unsaturated carboxylic acid in a quantity of between 0.5 and 5 % by weight of solid matter.

8. Pressure-sensitive adhesive according to one of claims 1 to 7, characterized in that the aqueous dispersion comprises 57 to 75 % by weight of acrylic copolymer and 43 to 25 % by weight of water.

9. Pressure-sensitive adhesive according to one of claims 1 to 8, characterized in that the pH of the aqueous dispersion is between 3.5 and 5.0.

10. Pressure-sensitive adhesive according to one of claims 1 to 9, characterized in that the mean particle size of the dispersion is between 270 and 500 nanometres.

11. Pressure-sensitive adhesive according to one of claims 1 to 10, characterized in that it possesses all the following properties :
- a shear strength, measured according to FINAT method n°8 at least equal to 5000 minutes,
- a looptack measured according to FINAT method n°9, at least equal to 7N/25mm, and
- an adhesion to glass at 180° after 20 minutes, according to the FINAT method n°1, after 7 days of adhesion at 60°C, at least equal to 8 N/25 mm.

12. Self-adhesive film having on one of its faces a layer of pressure-sensitive adhesive according to one of claims 1 to 11.

13. Use of methacrylic anhydride for the preparation of a pressure-sensitive adhesive according to one of claims 1 to 11.

## Patentansprüche

1. Druckempfindliches Klebemittel, das aus einer wässrigen Dispersion eines Acrylestercopolymers, das in Gegenwart von vernetzendem Monomer, das eine funktionelle Gruppe trägt, erhalten wird, besteht, wobei besagtes Copolymer eine Glasübergangstemperatur hat, die 0 °C nicht übersteigt, dadurch gekennzeichnet, dass besagtes vernetzendes Monomer Methacrylsäureanhydrid ist, das in einer Menge von 0,4 bis 2,5 Gew.-% der Feststoffe der Dispersion verwendet wird.

2. Druckempfindliches Klebemittel gemäß Anspruch 1, dadurch gekennzeichnet, dass die Acrylester, die in die Zusammensetzung besagten Copolymers eingehen, Acryl- und Methacrylester sind, deren Homopolymer eine Glasübergangstemperatur hat, die 10 °C nicht übersteigt.

3. Druckempfindliches Klebemittel gemäß Anspruch 1 oder Anspruch 2, dadurch gekennzeichnet, dass besagte Ester unter den Acrylaten mit 1 bis 8 Kohlenstoffatomen im Esterrest und den Methacrylaten mit wenigstens 5 Kohlenstoffatomen im Esterrest ausgewählt sind.

4. Druckempfindliches Klebemittel gemäß einem der Ansprüche 1 bis 3, dadurch gekennzeichnet, dass es außerdem wenigstens einen Kettenüberträger umfasst.

5. Druckempfindliches Klebemittel gemäß Anspruch 4, dadurch gekennzeichnet, dass besagter Kettenüberträger unter Thioglykolsäure, Alkylthioessigsäure, den Mercaptanen, den wasserlöslichen gesättigten aliphatischen Hydroxyverbindungen, den aliphatischen Hydroxyalkylaminen, den einwertigen Alkoholen und Tetrabromkohlenstoff ausgewählt ist.

6. Druckempfindliches Klebemittel gemäß Anspruch 4 oder Anspruch 5, dadurch gekennzeichnet, dass besagter Kettenüberträger in einem Anteil zwischen 0,05 und 2 Gew.-% der Feststoffe vorhanden ist.

7. Druckempfindliches Klebemittel gemäß einem der Ansprüche 1 bis 6, dadurch gekennzeichnet, dass es außerdem wenigstens eine ungesättigte Carbonsäure in einer Menge zwischen 0,5 und 5 Gew.-% der Feststoffe umfasst.

8. Druckempfindliches Klebemittel gemäß einem der Ansprüche 1 bis 7, dadurch gekennzeichnet, dass die wässrige Dispersion 57 bis 75 Gew.-% Acrylcopolymer und 43 bis 25 Gew.-% Wasser umfasst.

9. Druckempfindliches Klebemittel gemäß einem der Ansprüche 1 bis 8, dadurch gekennzeichnet, dass der pH-Wert der wässrigen Dispersion zwischen 3,5 und 5,0 liegt.

10. Druckempfindliches Klebemittel gemäß einem der Ansprüche 1 bis 9, dadurch gekennzeichnet, dass die mittlere Größe der Teilchen der Dispersion zwischen 270 und 500 Nanometer liegt.

11. Druckempfindliches Klebemittel gemäß einem der Ansprüche 1 bis 10, dadurch gekennzeichnet, dass es die Gesamtheit der folgenden Eigenschaften besitzt:
- einen Scherwiderstand, gemessen gemäß dem Verfahren FINAT Nr. 8, von wenigstens gleich 5000 Minuten,
- eine Kontaktaggressivität, gemessen gemäß dem Verfahren FINAT Nr. 9, von wenigstens gleich 7N/25 mm und
- eine Klebkraft auf Glas bei 180 °C nach 20 Minuten, gemäß dem Verfahren FINAT Nr. 1, nach 7 Tagen Kaschierung bei 60 °C, von wenigstens gleich 8N/25 mm.

12. Selbstklebefilm, der auf einer seiner Seiten eine Schicht eines druckempfindlichen Klebemittels gemäß einem der Ansprüche 1 bis 11 trägt.

13. Verwendung von Methacrylsäureanhydrid für die Herstellung eines druckempfindlichen Klebemittels gemäß einem der Ansprüche 1 bis 11.
